# EUROPEAN PATENT SPECIFICATION

(11) **EP 3 754 310 B1**
(45) Date of publication and mention of the grant of the patent: **09.08.2023**
(21) Application number: 19754469.5
(22) Date of filing: 31.01.2019
(51) Int. Cl.: G01F 23/2965, G01F 23/296

(54) **ULTRASONIC FLUID LEVEL SENSOR**
ULTRASCHALL-FLÜSSIGKEITSSTANDSENSOR
CAPTEUR ULTRASONIQUE DE NIVEAU DE LIQUIDE

(30) Priority: 14.02.2018 RU 2018105640
(43) Date of publication of application: 23.12.2020
(73) Proprietor: Demchenko, Aleksandr Petrovich, St.Petersburg, 191186 (RU); Balin, Nikolai Ivanovich, St. Petersburg 196158 (RU)
(72) Inventor: Demchenko, Aleksandr Petrovich, St.Petersburg, 191186 (RU); Balin, Nikolai Ivanovich, St. Petersburg 196158 (RU)
(74) Representative: Sloboshanin, Sergej
(86) International application number: PCT/RU2019/000060
(87) International publication number: WO 2019/160444

(56) References cited:
- WO-A1-98/28598
- RU-C1- 2 127 873
- RU-C1- 2 580 907
- RU-C2- 2 201 169
- RU-U1- 15 132
- US-A- 3 229 523
- US-A- 3 546 498
- US-A- 3 708 745
- US-A- 5 651 285
- US-A1- 2004 182 149
- US-A1- 2009 192 388
- US-B1- 6 272 921
- US-B2- 7 869 307

## Description

### TECHNICAL FIELD

The invention relates to devices for indicating the level of a fluid by measuring the parameters of sound waves.

### PRIOR ART

Fluid level indicator devices commonly require the basic elements of the device, namely the electroacoustic transducer and the sensing element (resonator), to be spaced apart at a necessary distance. This is particularly important in cases where the sensor is used in extreme conditions arising from the presence in the operating area (the site where the sensing element of the sensor is located) of high temperatures, highly active penetrating radiation, strong electromagnetic interference, intense vibrations or aggressive substances that are hazardous for the elements of the sensor and for the operating personnel, or other similar factors.

A long metal waveguide may be used for the spatial separation of the electroacoustic transducer and the resonator. However, a simple increase in the length of the waveguide is only possible over a small distance (up to one meter) and with a straight waveguide.

There are known sensor designs in which the electroacoustic transducer and the resonator are separated by a specified distance.

The patent US9550260, published on 24.01.2017, IPC G01F023/296, discloses the design of an ultrasonic sensor comprising an electroacoustic transducer and a plurality of acoustic resonators, connected by narrow tubes (waveguides) to the electroacoustic transducer. Special fittings are used for the passage of the waveguides.

The patent US8248888, published on 21.08.2012, IPC G01 S015/00, discloses the design of an ultrasonic level meter with a tubular waveguide connecting an electroacoustic transducer to a resonator.

The use of tubular waveguides means that special pass-through devices must be used if the waveguide has to pass through a barrier or screen.

Document US 2009/192388 A1 refers to an ultrasonic transmission member which includes one end part and the other end part and is configured to transmit an ultrasonic wave input into the one end part to the other end part. The ultrasonic transmission member is formed by preparing a main mold having a casting cavity corresponding to a whole outer shape of the ultrasonic transmission member, melting an alloy which is a material of a metallic glass, and pouring the melted alloy into the casting cavity of the main mold to solidify the melted alloy in a liquid phase state thereof

There is also a known sensor design according to the patent RU2127873, published on 20.03.1999, which is the closest analog and comprises an electroacoustic transducer and an acoustic resonator. Further, said sensor comprises a detector case and a rod acoustic waveguide on one end of which the electroacoustic transducer is located. The acoustic resonator is located on the other end of the rod acoustic waveguide. The resonator space is isolated from an external medium. The detector case is fixed rigidly and hermetically on the surface of the rod acoustic waveguide in a zone of minimum rod oscillations of the rod acoustic waveguide at operating detector frequency and contains an attachment means for attaching the detector to an external base.

### DISCLOSURE OF THE INVENTION

The technical result achieved by the present invention is an increase in the functional capabilities of the sensor due to its use in conditions of high temperature, radiation, strong electromagnetic interference, intense vibrations, impacts and other negative factors. The device can also be installed, maintained and repaired without any hazard to servicing personnel due to harmful factors.

An ultrasonic fluid level sensor comprises an acoustic waveguide having an electroacoustic transducer arranged at one end and an acoustic resonator arranged at the other end. The acoustic waveguide includes a flexible metal rod, to each end of which a cylindrical waveguide is rigidly connected via a conical acoustic concentrator, one cylindrical waveguide being connected to the electroacoustic transducer while the other cylindrical waveguide is connected to the acoustic resonator that forms the sensing element of the sensor.

The outer surface of at least one cylindrical waveguide is adapted to be rigidly attached in a barrier through which the waveguide is to pass.

The use of a flexible metal rod to connect the acoustic resonator to the electroacoustic transducer increases the range of possible uses of the sensor. The acoustic resonator, forming the sensing element of the sensor, and the electroacoustic transducer can be spaced apart, thereby simplifying the installation of the individual elements of the device. The sensing element of the sensor, namely the resonator, may be positioned in the requisite area for monitoring the fluid level, while the electroacoustic transducer may be positioned in a place which is safe and convenient for the operating personnel, being characterized by a normal temperature and the absence of radiation, interference and vibrations.

The connection between the electroacoustic transducer and the resonator is made by transmitting ultrasonic pulses along the flexible metal rod which is resistant to heat, radiation, vibration and other aggressive effects that would be harmful to the transducer and operating personnel.

For passing through metal barriers, walls, and enclosures, the acoustic waveguide has parts of the waveguide (cylindrical waveguide) whose outer surfaces may be used to fix it hermetically, for example, by welding to the walls, enclosures or barriers that it passes through.

Additionally, the flexible metal rod may be made so that it can be given the shape required for its positioning in the space allocated to it. The flexible metal rod may also be made in the form of a wire. In particular, the flexible metal rod in wire form may have a diameter of 3-6 mm.

A conical acoustic concentrator is rigidly attached by its vertex to the flexible metal rod (wire), and is rigidly attached to the cylindrical waveguide by its wide part. In addition, the vertex of said conical acoustic concentrator has a diameter equal to the diameter of the flexible metal rod, and the wide part of said conical acoustic concentrator has a diameter equal to the diameter of the cylindrical waveguide.

in particular, one of the cylindrical waveguides is made so that it can be rigidly attached to the acoustic resonator.

In a particular case, the outer surface of at least one cylindrical waveguide is made so that it can be rigidly attached in a barrier through which the waveguide is to pass.

In a particular case, the part of the acoustic waveguide comprising the flexible metal rod and the conical acoustic concentrators may be placed in a flexible protective tube. The tube may be provided internally with adapters for fastening the flexible waveguide inside the protective tube, and may be made so that it can be attached to the outer surfaces of the flexible metal rod.

### BRIEF DESCRIPTION OF THE DRAWINGS

Fig. 1 shows the design of the sensor installed in an operating position.
Fig. 2 shows the design of the electroacoustic transducer in a housing with an acoustic waveguide attached.
Fig. 3 shows the design of the acoustic waveguide of the sensor.
Fig. 4 shows the design of the acoustic waveguide in an enclosure.
Fig. 5 shows part of the enclosure of the acoustic waveguide with adapters.
Fig. 6 shows a variant embodiment of the acoustic resonator of the sensor with a closed cavity.

### VARIANT EMBODIMENTS OF THE INVENTION

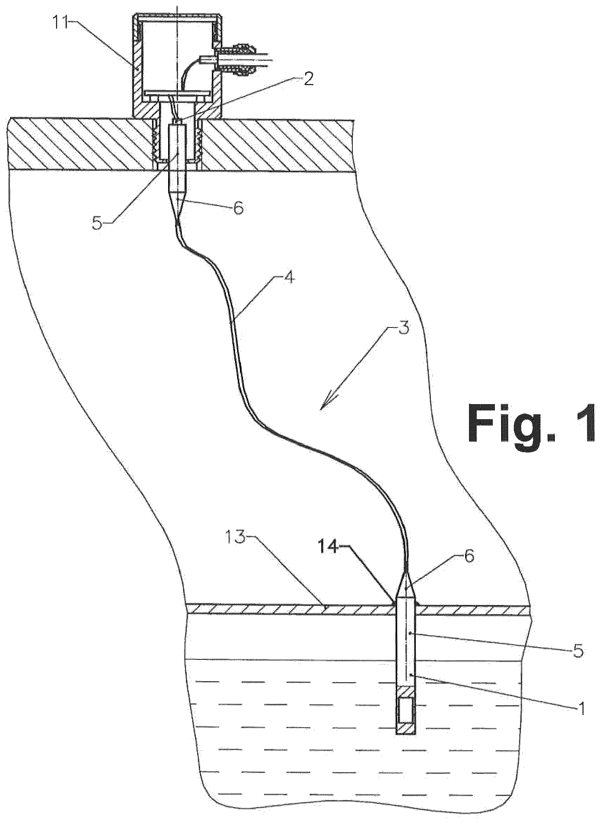

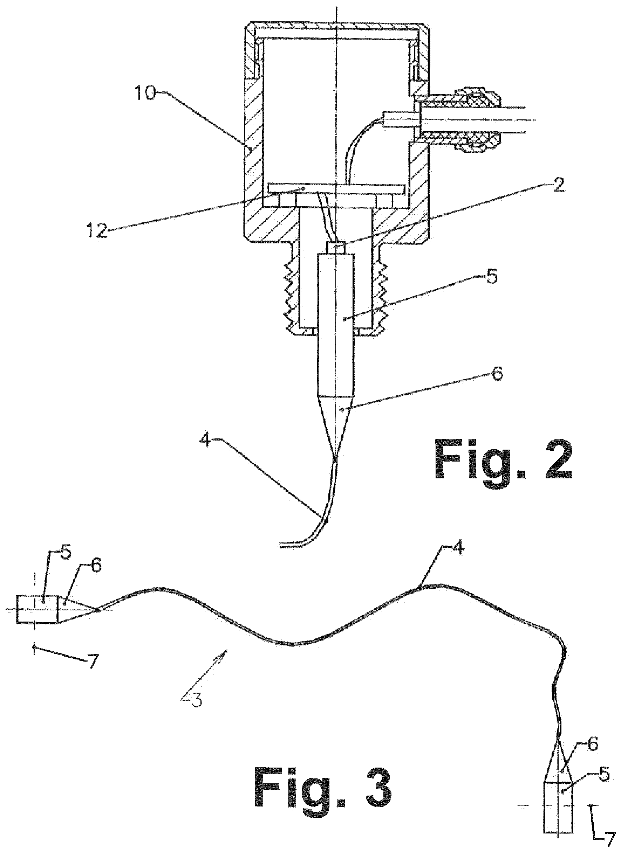

The ultrasonic fluid level sensor comprises an acoustic resonator 1 connected via an acoustic waveguide 3 to an electroacoustic transducer 2 (Fig. 1). The acoustic waveguide 3 comprises a flexible metal rod 4, to each end of which a cylindrical waveguide 5 is attached rigidly via a conical acoustic concentrator 6. One cylindrical waveguide 5 is connected to the acoustic resonator 1, and the other is connected to the electroacoustic transducer 2. The flexible metal rod 4 may be made in the form of a flexible bar or wire with a diameter of 3-6 mm. The flexible metal rod 4 is rigidly attached at both ends to the vertices of the conical acoustic concentrators 6, which in turn pass into the cylindrical waveguides 5 (Fig. 3). As shown in the drawing, the vertex of said conical acoustic concentrator 6 has a diameter similar to the diameter of the flexible metal rod 4, and the wide part of said conical acoustic concentrator 6 has a diameter similar to the diameter of the cylindrical waveguide 5. The electroacoustic transducer 2 may be installed in a housing 10 (Fig. 2) which enables it to be installed on any base. An electronic unit 12 may be placed in the housing 10.

If necessary, the acoustic waveguide 3 may be rigidly and hermetically installed, using the outer surface of any of the cylindrical waveguides 5, in any barrier or base, for example in the area of connection 7 of the waveguide 6 (Fig. 3). Fig. 1 shows the attachment of the cylindrical waveguide 5 to a barrier 13 using a weld seam 14. The flexible metal rod 4 (wire) may have any shape that is convenient for the positioning of the rod 4 in the space allocated to it.

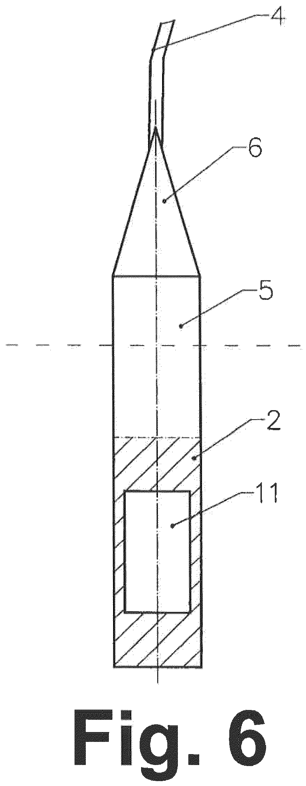

Various types of acoustic resonator 1 may be used in the present sensor. For example, a resonator with a closed cavity 11 may be used, as shown in Fig. 6.

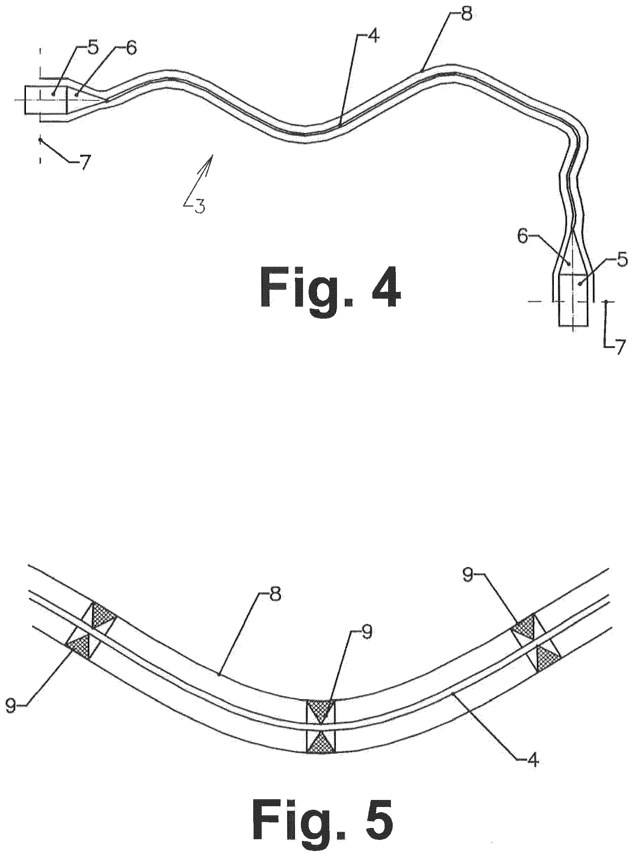

The part of the acoustic waveguide 3 comprising the flexible metal rod 4 and the conical acoustic concentrators 6 may be placed in a flexible protective tube 8, for example a corrugated metal tube, in order to protect them from contaminants, fluids and damage (Fig. 4).

The flexible protective tube 8 may be fitted with adapters 9 (Fig. 5) for fixing the flexible waveguide inside the protective tube, and may be attached to the outer surfaces of the flexible metal rod 4. The adapters 9 may take the form of conical inserts with an inner aperture for the wire, the aperture being slightly larger than the diameter of the flexible rod (wire) 4.

Pulsed acoustic oscillations are transmitted into the flexible metal rod (wire) 4, using a pulse generator (not shown in the drawings) of the electronic unit 12, the electroacoustic transducer 2, the cylindrical waveguide 5 and the conical acoustic concentrator 6, which is also an acoustic adapter. The oscillations are sent from the opposite end of the thin flexible metal rod with the aid of the acoustic concentrator 6, and enter the cylindrical waveguide 5, to the opposite end of which the acoustic resonator 2 is attached. Having reached the resonator, the acoustic pulse creates natural oscillations in the resonator 2, the duration of which depends on the medium (liquid or gaseous) in which it is located.

The natural oscillations of the resonator 1, being propagated in the opposite direction to the movement of the exciting pulse, pass sequentially through the cylindrical waveguide 5, the conical acoustic concentrator 6, the thin flexible metal rod 4, the conical acoustic concentrator 6 and the cylindrical waveguide 5, and reach the electroacoustic transducer 2. A pulsed electrical signal, the shape, properties and form of which are determined by the form (shape and properties) of the natural oscillations of the acoustic resonator 1, is produced at the terminals of the transducer 2. The electrical circuit 12 processes the received oscillations, evaluates the decrease in the attenuation of the natural oscillations of the resonator 1, and makes a decision as to whether the medium in which the resonator 1 is located is or is not a fluid.

The weakening of the signal during its propagation along the flexible rod limits the length of this rod that can be used. In practice, it has been found that a flexible rod with a length of up to 12 meters can be used in a fluid level indicator.

### INDUSTRIAL APPLICATION

The sensor makes it possible to use a flexible metal rod (wire) as part of the acoustic waveguide for the construction of a waveguide having the necessary length and configuration. By using a long flexible metal wire for connecting the main parts of the sensor, the installation of its individual elements can be simplified. This enables the sensing element of the sensor (the acoustic resonator) and the electroacoustic transducer to be spaced apart. In this case, the sensing element of the sensor (the acoustic resonator) may be positioned in the requisite area for monitoring the fluid level, and in the requisite position, while the electroacoustic transducer may be positioned in a place which is safe and convenient for the operating personnel.

In this case, the connection between the electroacoustic transducer and the sensing element of the device (the resonator) is made by transmitting ultrasonic pulses along the thin flexible metal rod which is resistant to heat, radiation, vibration and other aggressive effects that would be harmful to the transducer and to the operating personnel.

A sensor made according to this design may be used at high temperature, in conditions of various forms of radiation and in the presence of strong electromagnetic interference, intense vibrations and impacts. The sensor is easily operated, tested and repaired of the device without any hazard to the operating personnel due to harmful factors.

## Claims

1. An ultrasonic fluid level sensor, comprising an acoustic waveguide (3), at one end of which an electroacoustic transducer (2) is arranged, and at the other end of which an acoustic resonator (1) is arranged,
**characterized in that**
the acoustic waveguide (3) comprising a flexible metal rod (4), to each end of which a cylindrical waveguide (5) is rigidly connected via a conical acoustic concentrator (6), one cylindrical waveguide (5) being connected to the electroacoustic transducer (2) and the other cylindrical waveguide (5) being connected to the acoustic resonator (1),
wherein the outer surface of at least one cylindrical waveguide (5) is adapted to be rigidly attached in a barrier (13) through which the waveguide is to pass.

2. The ultrasonic sensor as claimed in claim 1, **characterized in that** the acoustic resonator (1) is made with a cavity (11) being isolated from the external medium.

3. The ultrasonic sensor as claimed in claim 1, **characterized in that** the flexible metal rod (4) is adapted to be giving the shape required for its positioning in the space allocated to it.

4. The ultrasonic sensor as claimed in claim 3, **characterized in that** the flexible metal rod (4) is made in the form of a wire.

5. The ultrasonic sensor as claimed in claim 4, **characterized in that** said wire has a diameter of 3-6 mm.

6. The ultrasonic sensor as claimed in claim 1, **characterized in that** the conical acoustic concentrator (6) is rigidly attached by its vertex to the flexible metal rod (4), and is rigidly attached to the cylindrical waveguide (5) by its wide part.

7. The ultrasonic sensor as claimed in claim 1, **characterized in that** the vertex of said conical acoustic concentrator (6) has a diameter equal to the diameter of the flexible metal rod (4), and the wide part of said conical acoustic concentrator (6) has a diameter equal to the diameter of the cylindrical waveguide (5).

8. The ultrasonic sensor as claimed in claim 1, **characterized in that** one of the cylindrical waveguides (5) is adapted to be rigidly attached to the acoustic resonator (1).

9. The ultrasonic sensor as claimed in claim 1, **characterized in that** the part of the acoustic waveguide (3) comprising the flexible metal rod (4) and the conical acoustic concentrators (6) is placed in a flexible protective tube (8).

10. The ultrasonic sensor as claimed in claim 9, **characterized in that** said flexible protective tube (8) is provided with adapters (9) for fastening the flexible waveguide inside the protective tube (8), and is adapted to be attached to the outer surfaces of the flexible metal rod (4).

## Patentansprüche

1. Ultraschall-Flüssigkeitsstandsensor, umfassend einen akustischen Wellenleiter (3), an dessen einem Ende ein elektroakustischer Wandler (2) angeordnet ist und an dessen anderem Ende ein akustischer Resonator (1) angeordnet ist,
**dadurch gekennzeichnet, dass**
der akustische Wellenleiter (3) einen flexiblen Metallstab (4) umfasst, mit dessen Enden jeweils ein zylindrischer Wellenleiter (5) über einen konischen akustischen Konzentrator (6) starr verbunden ist, wobei ein zylindrischer Wellenleiter (5) mit dem elektroakustischen Wandler (2) verbunden ist und der andere zylindrische Wellenleiter (5) mit dem akustischen Resonator (1) verbunden ist,
wobei die äußere Oberfläche wenigstens eines zylindrischen Wellenleiters (5) ausgelegt ist, starr in einer Barriere (13) angebracht zu werden, durch die der Wellenleiter hindurchgehen soll.

2. Ultraschallsensor nach Anspruch 1, **dadurch gekennzeichnet, dass** der akustische Resonator (1) mit einem von dem äußeren Medium isolierten Hohlraum (11) ausgebildet ist.

3. Ultraschallsensor nach Anspruch 1, **dadurch gekennzeichnet, dass** der flexible Metallstab (4) ausgelegt ist, dass er die Form erhält, die für seine Positionierung in dem ihm zugeordneten Raum erforderlich ist.

4. Ultraschallsensor nach Anspruch 3, **dadurch gekennzeichnet, dass** der flexible Metallstab (4) in der Form eines Drahtes ausgebildet ist.

5. Ultraschallsensor nach Anspruch 4, **dadurch gekennzeichnet, dass** der Draht einen Durchmesser von 3-6 mm hat.

6. Ultraschallsensor nach Anspruch 1, **dadurch gekennzeichnet, dass** der konische akustische Konzentrator (6) mit seinem Scheitelpunkt an dem flexiblen Metallstab (4) starr angebracht ist und mit seinem breiten Teil an dem zylindrischen Wellenleiter (5) starr angebracht ist.

7. Ultraschallsensor nach Anspruch 1, **dadurch gekennzeichnet, dass** der Scheitelpunkt des konischen akustischen Konzentrators (6) einen Durchmesser hat, der gleich dem Durchmesser des flexiblen Metallstabs (4) ist, und der breite Teil des konischen akustischen Konzentrators (6) einen Durchmesser hat, der gleich dem Durchmesser des zylindrischen Wellenleiters (5) ist.

8. Ultraschallsensor nach Anspruch 1, **dadurch gekennzeichnet, dass** einer der zylindrischen Wellenleiter (5) ausgelegt ist, starr an dem akustischen Resonator (1) angebracht zu werden.

9. Ultraschallsensor nach Anspruch 1, **dadurch gekennzeichnet, dass** der Teil des akustischen Wellenleiters (3), der den flexiblen Metallstab (4) und die konischen akustischen Konzentratoren (6) umfasst, in einem flexiblen Schutzrohr (8) angeordnet ist.

10. Ultraschallsensor nach Anspruch 9, **dadurch gekennzeichnet, dass** das flexible Schutzrohr (8) mit Adaptern (9) zur Befestigung des flexiblen Wellenleiters im Inneren des Schutzrohrs (8) versehen ist und ausgelegt ist, an den äußeren Oberflächen des flexiblen Metallstabs (4) angebracht zu werden.

## Revendications

1. Capteur ultrasonique de niveau de liquide, comprenant un guide d'onde acoustique (3) à une extrémité duquel un transducteur électro-acoustique (2) est situé et à l'autre extrémité duquel un résonateur acoustique (1) est situé,
**caractérisé en ce que**
le guide d'onde acoustique (3) comprend une tige métallique flexible (4) à chaque extrémité de laquelle un guide d'onde cylindrique (5) est connecté rigidement par le biais d'un concentrateur acoustique conique (6), un guide d'onde cylindrique (5) étant connecté au transducteur électro-acoustique (2) et l'autre guide d'onde cylindrique (5) étant connecté au résonateur acoustique (1),
dans lequel la surface extérieure d'au moins un guide d'onde cylindrique (5) est conçue pour être fixée rigidement dans une barrière (13) à travers laquelle le guide d'onde doit passer.

2. Capteur ultrasonique selon la revendication 1, **caractérisé en ce que** le résonateur acoustique (1) comporte une cavité (11) qui est isolée du milieu extérieur.

3. Capteur ultrasonique selon la revendication 1, **caractérisé en ce que** la tige métallique flexible (4) est conçue pour adopter la forme nécessaire à son positionnement dans l'espace qui lui est alloué.

4. Capteur ultrasonique selon la revendication 3, **caractérisé en ce que** la tige métallique flexible (4) a la forme d'un fil.

5. Capteur ultrasonique selon la revendication 4, **caractérisé en ce que** ledit fil a un diamètre compris entre 3 mm et 6 mm.

6. Capteur ultrasonique selon la revendication 1, **caractérisé en ce que** le concentrateur acoustique conique (6) est fixé rigidement, par son sommet, à la tige métallique flexible (4) et est fixé rigidement au guide d'onde cylindrique (5) par sa partie large.

7. Capteur ultrasonique selon la revendication 1, **caractérisé en ce que** le sommet dudit concentrateur acoustique conique (6) a un diamètre égal au diamètre de la tige métallique flexible (4) et la partie large dudit concentrateur acoustique conique (6) a un diamètre égal au diamètre du guide d'onde cylindrique (5).

8. Capteur ultrasonique selon la revendication 1, **caractérisé en ce que** l'un des guides d'ondes acoustiques (5) est conçu pour être fixé rigidement au résonateur acoustique (1).

9. Capteur ultrasonique selon la revendication 1, **caractérisé en ce que** la partie du guide d'onde acoustique (3) comprenant la tige métallique flexible (4) et les concentrateurs acoustiques coniques (6) est placée dans un tube de protection flexible (8).

10. Capteur ultrasonique selon la revendication 9, **caractérisé en ce que** ledit tube de protection flexible (8) est pourvu d'adaptateurs (9) destinés à bloquer le guide d'onde flexible à l'intérieur du tube de protection (8), et est conçu pour être fixé aux surfaces extérieures de la tige métallique flexible (4).
